# EUROPEAN PATENT SPECIFICATION

(11) **EP 1 949 396 B1**
(45) Date of publication and mention of the grant of the patent: **25.02.2015**
(21) Application number: 06837180.6
(22) Date of filing: 09.11.2006
(51) Int. Cl.: G09G 5/00, H03M 11/00

(54) **MULTI-FUNCTIONAL CONTROL INTERFACE**
MULTIFUNKTIONALE STEUERSCHNITTSTELLE
INTERFACE DE COMMANDE A FONCTIONS MULTIPLES

(30) Priority: 10.11.2005 US 735149 P
(43) Date of publication of application: 30.07.2008
(73) Proprietor: Id8 Group R2 Studios, Inc., Hillsborough CA 94010 (US)
(72) Inventor: KRZYZANOWSKI, Paul, Flemington, New York 08822 (US); FLORES, Justin, Round rock, Texas 78664 (US)
(74) Representative: Free, Rachel Alder
(86) International application number: PCT/US2006/043527
(87) International publication number: WO 2007/058858

(56) References cited:
- EP-A1- 1 628 459
- JP-A- 2000 200 137
- US-A- 5 239 152
- US-A- 5 408 060
- US-A- 5 542 770
- US-A- 6 067 074
- US-A1- 2002 021 562
- US-A1- 2003 034 240
- US-B1- 6 798 359
- US-B2- 6 789 359

## Description

### BACKGROUND

### Field of the Invention

The present invention relates generally to a user control interface, and in particular, a system and method for providing an interface for controlling multiple device functionality.

### Background

The consumer electronics (CE) industry has experienced a trend in which fewer devices are providing greater capabilities and functionality. For example, personal digital assistants (PDAs), while originally designed to store and organize personal information, are now providing additional functionality normally provided by other devices, such as voice telephony. The integration of phone functionality on a PDA provides for device consolidation and eliminates the need for the user to carry both a PDA and a separate portable phone.

However, a disadvantage of such "combo" or "multiple-in-1" devices is that a different interface/control set may be required to operate and control each separate component or device. In the case of the PDA/phone device, one interface is necessary for controlling the PDA functionality and another interface is necessary to control the telephony functionality. This is because small CE devices do not have the physical space for a separate dedicated control interface for each device.

One method of addressing the "interface real-estate" problem is to use touch screens displaying computer-generated graphic user interfaces (GUIs). A single touch screen can display several different interfaces. Typically, the touch screen interface comprises virtual buttons that can be activated by pressing a region on the screen representing a button with the user's finger or a stylus.

Although touch screens provide great efficiency and flexibility, many users do not like using touch screens. Instead, they prefer the tactile feel and response provided by hard buttons (e.g., physical buttons, detent buttons, depressible buttons, etc.). On reason for this is that physical buttons typically have a distinctive feel to which a user can learn to be accustomed. This allows a user to navigate and operate the control without looking down at the interface. That is not practical with "soft" buttons.

However, each physical button occupies physical space on the device. Due to inherent space limitations of small portable devices, these devices cannot afford to have separate dedicated control interfaces for each component without sacrificing the small size required for portability. Rather, these devices must use one control interface and assign more than one function to each physical button in the control interface. For example, a physical button that may correspond to the letter "S" button on a control interface for controlling PDA functionality may also serve double duty as the "4" button for phone operation. This multi-duty assignment is indicated by marking the button appropriately. The more functions that are assigned to a button, however, the more markings that must be printed on the button. This may lead to very "busy-looking" and confusing button layouts.

An example of illuminated button interface having different modes of operation is disclosed in US-A-2003/034240.

Therefore, what is needed is a system and method for providing a multi-functional user control interface using physical interaction devices whose layout reduces confusion to a user.

### SUMMARY

One embodiment of the present invention provides a user control interface for controlling multiple device functionality comprising a support structure, control regions, depressible interaction devices, and a controller. The control regions are formed on the support structure. Each of the control regions comprises light emitting areas. The depressible interaction devices cover respective ones of the control regions. The controller is coupled to the control regions and controls which of the emitting areas is output from respective ones of the interaction devices based on one or more modes of operation of the user control interface.

Another embodiment of the present invention provides a method for using a user control interface that controls multiple device functionality. A first set of openings of a first set of depressible interaction devices is illuminated during a first mode of operation. A second set of openings of one of the first set or a second set of depressible interaction devices is illuminated during a second mode of operation. The second set of openings can include all, none, or part of the first set of openings.

Further features and advantages of the invention, as well as the structure and operation of various embodiments of the invention, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate one or more embodiments of the present invention and, together with the description, further serve to explain the principles of the invention and to enable a person skilled in the pertinent art to make and use the invention.
Figures 1, 2, 3, and 4 show various illumination configurations of interaction devices or buttons for various modes of operation of a user controller interface, according to one embodiment of the present invention.
Figures 5 and 6 show a perspective and exploded view, respectively, of a support device and control regions, according to one embodiment of the present invention.
Figures 7 and 8 show bottom and top views, respectively, of an interaction device, according to one embodiment of the present invention.
Figure 9 shows a bottom view of an interaction device, according to one embodiment of the present invention.
Figures 10 and 11 show various exploded views of the interaction device in Figure 9.
Figures 12 and 13 show a view of before and after an interaction device is placed around an insertable device, according to one embodiment of the present invention.
Figure 14 shows an exploded view of a portion of a user controllable interface, according to one embodiment of the present invention.
Figures 15, 16, and 17 show a multi-functional device having an interface and a display functioning in various modes of operation, according to one embodiment of the present invention.

The present invention will now be described with reference to the accompanying drawings. In the drawings, like reference numbers can indicate identical or functionally similar elements. Additionally, the left-most digit(s) of a reference number can identify the drawing in which the reference number first appears.

### DETAILED DESCRIPTION

While specific configurations and arrangements are discussed herein, it should be understood that this is done for illustrative purposes only. A person skilled in the pertinent art will recognize that other configurations and arrangements can be used without departing from the spirit and scope of the present invention. It will be apparent to a person skilled in the pertinent art that this invention can also be employed in a variety of other applications.

### Overall Interface

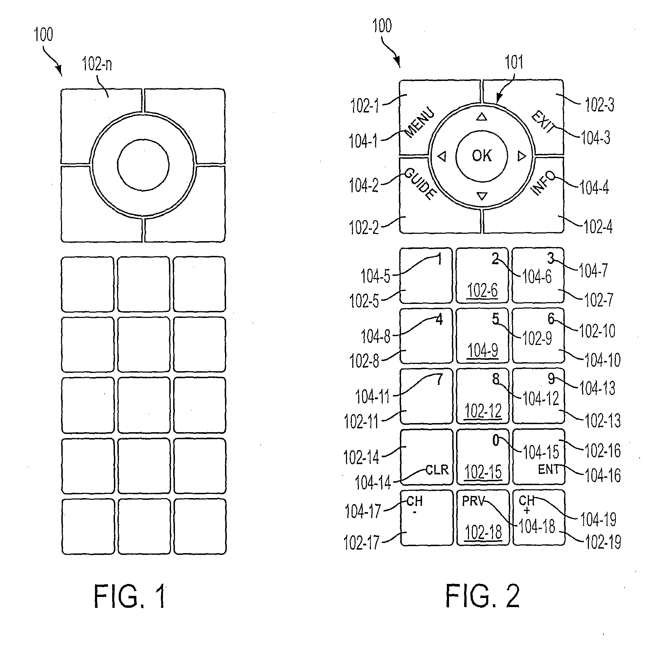

Figures 1, 2, 3, and 4 show various illumination configurations of interaction devices 102 (e.g., buttons, physical buttons, detent "soft" buttons, depressible buttons, or the like) for various modes of operation of a user controller interface 100, according to one embodiment of the present invention. User controller interface 100 can be associated with and used to control a multi-functional device, such as a remote control unit for controlling multiple CE devices that also has voice telephony functionality.

Figure 1 shows an arrangement of buttons 102 for a multi-functional device in rest mode, in which none of buttons 102 are illuminated.

Figure 2 shows a "channels" arrangement of illuminated buttons 102 for operating a television, cable box, set-top box, audio receiver, or the like. The operations that are available to the user are illuminated in a set of illumination areas (designated in Figure 2 with reference numbers "104-n" (where n≥1)) on their respective buttons (designated with reference numbers "102-n" (where n ≥ 1)). In this example, illumination area 104-1 displays the "MENU" function, indicating that an on-screen menu will appear on an associated display when button 102-1 is depressed. Similarly, buttons 102-2 to 102-4 provide well-known interactive viewing functions as shown in illumination areas 104-2 to 104-4. Specifically, illumination area 104-2 on button 102-2 displays the "GUIDE" function for obtaining programming information; illumination area 104-3 on button 102-3 displays the "EXIT" function for exiting a screen or mode; and illumination area 104-4 on button 102-4 displays the "INFO" function for accessing information relating to the program being viewed by the user. Buttons 102-1 through 102-4 circumscribe a directional or "D" pad 101 for navigating and selecting menu items.

Buttons 102-5 through 102-13 and 102-15 operate to enter numbers. Button 102-14 operates to clear an entry. Button 102-16 operates to exit a screen. Buttons 102-17 and 102-19 operate to move a channel up and down. Button 102-18 operates to return the screen to a previous screen. All these functions are illuminated in corresponding illumination areas 104-5 to 104-19.

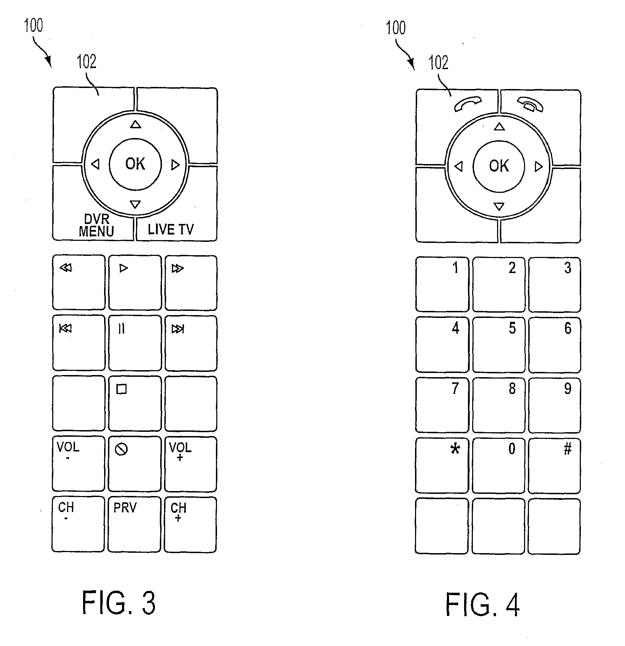

It is to be appreciated that Figures 3 and 4, each of which depict a user interface identical to the user interface 100 shown in Figure 1, employ the same button reference scheme (102-1 to 102-n) and illumination area reference scheme (104-1 to 104-n) as used in Figure 1. The reference numbers are not labeled on Figures 3 and 4 for simplicity and convenience.

Figure 3 shows the user interface 100 illuminated for the "transport" mode used for controlling the operation of a device such as a digital video recorder (DVR). In this exemplary configuration, illumination area 104-2 of button 102-2 displays the "DVR MENU" function for accessing an on-screen operational menu upon activation of button 102-2, and illumination area 104-4 of button 102-4 displays the "LIVE TV" function for viewing programs via the TV tuner. Buttons 102-5 through 102-10 and 102-12 provide well-known functions to control viewing of recorded content (i.e., rewind, play, fast forward, previous/replay, pause, next/skip, and stop, respectively). Buttons 102-13 and 102-15 operate to control volume. Buttons 102-17 and 102-19 operate to control channel movement during live TV. Button 102-18 operates to return to the channel previously viewed by the user. These functions are displayed to the user via respective 104-n illumination areas, as shown.

Figure 4 shows the user interface 100 illuminated for the "phone" mode for voice telephony operation. In this configuration, buttons 102-1 and 102-3 operate to control "picking up" and "hanging up" of the telephone, buttons 102-5 through 102-13 and 102-15 operate to correspond to a normal telephone keypad, and buttons 102-14 and 102-16 operate to correspond to the star (*) and pound (#) keys on a normal telephone keypad. These functions are displayed to the user via respective 104-n illumination areas, as shown.

Thus, the present invention provides a single user interface comprised of hard buttons that can be automatically configured through selective illumination to control a multi-function device that operates in multiple modes, including, but not limited to, a rest mode, channel mode, transport mode, and phone mode. The foregoing description is merely illustrative, and the number and type of functionality control and modes is application dependent, and merely exemplary in this embodiment.

### Exemplary Control Regions

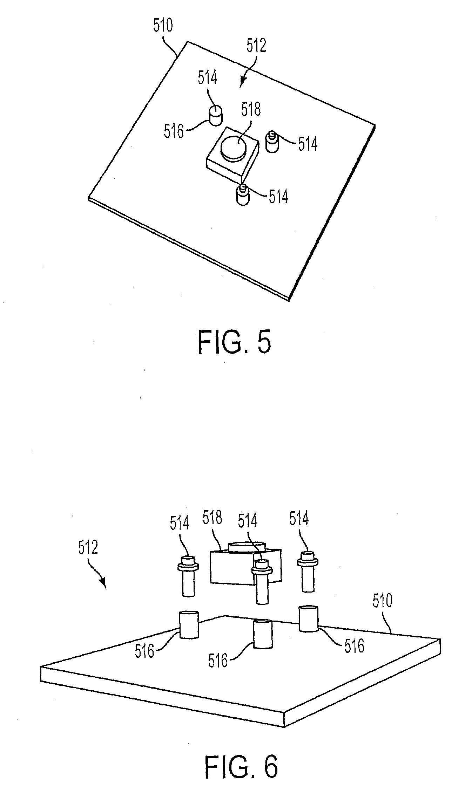

Figures 5 and 6 show a perspective and exploded view, respectively, of certain structural elements of a button comprising the user interface 100 of the present invention. Each button has an assembly 512 arranged on a support layer 510 that is part of the multi-functional device controlled by interface 100. According to one embodiment of the present invention, each button comprises an arrangement of one or more mono-colored or multi-colored light sources, such as light panels (e.g., an electroluminescent (EL) display) or light-emitting diodes (LEDs) 514, which are mounted within opaque stalks/spacers 516 located on the support layer 510. In addition to physically housing the LEDs, the stalks/spacers 516 also prevent light emitted from the LED from emanating in a lateral direction. Other types of light sources or light pipes, or the like, can be used instead of LEDs. The number of LEDs 514 assigned to a button may correspond to the number of functions/modes of operation that can be performed by the multi-functional device in the case where each LED is dedicated to illuminate a single functionality of the device. Alternatively, a light pipe can be used to transfer the light of a single LED to multiple illumination areas, diminishing the number of LEDs required.

Additionally, for each button, a switch 518 is placed on support layer 510 that provides electrical connectivity to the underlying circuitry (not shown) of the multi-function device. Accordingly, when button 102 is depressed, it activates a respective switch 518 to initiate an operation corresponding to the function displayed in illumination area 104 of that button 102. The exact function will depend on the mode of operation of the multi-functional device at the time of activation.

### First Embodiment of Buttons According to the Present Invention

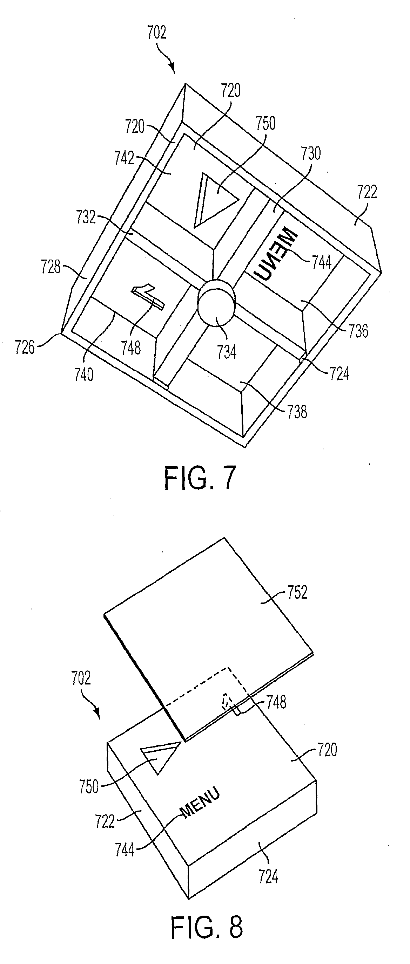

Figures 7 and 8 show bottom and top views, respectively, of a hard cap or cover 702, which is an additional component of a button comprising the user interface 100 according to one embodiment of the present invention. Each hard cap 702 comprises a surface wall 720, four side walls 722, 724, 726, and 728, and at least one partition wall 730 (although two partition walls 730 and 732 are shown in Figure 7). Partition walls 730 and 732 form internal sections or cavities 736, 738, 740, and 742. Located with respect to at least one partition wall 730 or 732 is an extension or protrusion 734 that extends beyond the bottom surface of the partition walls 730 and 732. In one example, extension 734 is a stem coupled to surface wall 720 that passes through partition walls 730 and 732, while in another example extension 734 is coupled to one of the partition walls 730 or 732.

In accordance with the present invention, a hard cap 702 is mounted over the LED-switch assembly 512 shown in Figures 5 and 6 such that (i) each section or cavity 736, 738, 740, and 742 of hard cap 702 houses a light source 514 and corresponding stalk/spacer 516, and (ii) extension 734 of hard cap 702 makes contact with switch 518. Sections or cavities 736, 738, 740, and 742, which are formed by sidewalls 722, 724, 726, 728, 730, and 732, also function to prevent light emitted from an illuminated light source 514 in one of section or cavity 736, 738, 740, and 742 of hard cap 702 from entering into another section or cavity.

Hard cap 702 may be molded into its shape with certain openings 744, 748, and 750 formed in surface wall 720. For example, opening 744 in section 736 of the hard cap 702 shown in Figure 7 is molded into the word "MENU." Opening 748 in section 740 of hard cap 702 is molded into the number "1," and opening 750 in section 742 is molded in the arrow symbol for the "play" operation. In this embodiment, hard cap 702 has no opening molded into surface wall 720 in the area of section 738. It should be noted that instead of complete openings, openings 744, 746, and 750 can be covered by transparent/translucent labels physically inserted into surface wall 720 of the button 702.

A thin film layer 752 is coupled to or formed on a top surface of surface wall 720 of each button 702. Layer 752, which can be made from a semi-opaque material, optically hides openings or labels 744, 746, and 750 when the corresponding light source 514 underneath is not illuminated. When user interface 100 is not in use, i.e., in rest mode, layer 752 gives each button of user interface 100 the appearance of a flat, smooth, and blank surface (see Figure 1). During other modes, such as the channel, transport, and phone modes, layer 752 allows light from the underlying light source 514 (Figures 5 and 6) to pass through when the light source 514 is illuminated, thereby revealing the corresponding opening or label 744, 746, or 750 to the user.

### Second Embodiment of Buttons According to the Present Invention

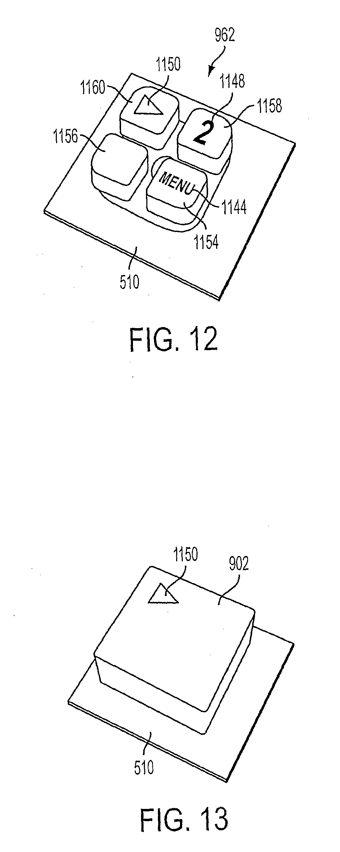

Reference is made to Figures 12 and 13 in connection with the following description of an alternative structure for the buttons of the present invention. As illustrated in Figure 12, piece 962 comprises four hollow prongs or members 1154, 1156, 1158, and 1160 that extend from base layer 510. Piece 962 is made from a flexible translucent, light-diffusing material.

Figure 13 shows a button cap 902 that is designed to fit over piece 962. Button cap 902 is made from a hard, semi-opaque material and serves as an outer shell for piece 962.

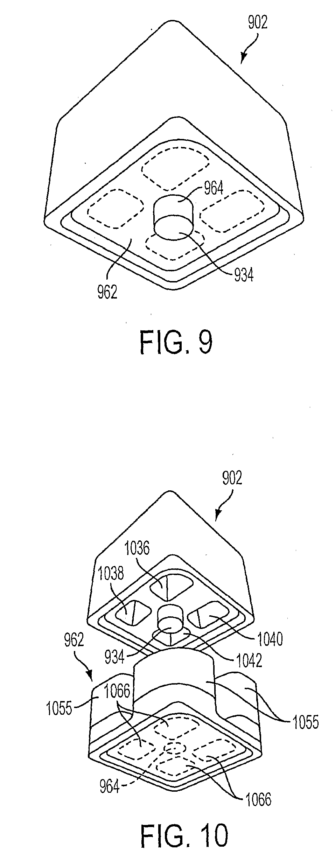

Figure 9 shows a bottom view of a piece 962 inserted into button cap 902, according to one embodiment of the present invention. Figures 10 shows an exploded views of the button comprising button cap 902 and piece 962.

As shown in Figure 10, piece 962 includes several members or prongs 1055 that have hollow cavities 1066. Similarly, button cap 902 has hollow cavities 1036 to 1042. Piece 960 is inserted into button cap 902 such that prongs 1055 are received within respective or corresponding sections 1036 to 1042 of button cap 902. Figure 9 shows piece 962 after it is properly mated with button cap 902. Stem 934 is shown protruding from the bottom surface of piece 962 so that it can interact with the underlying switch 518 on base layer 510.

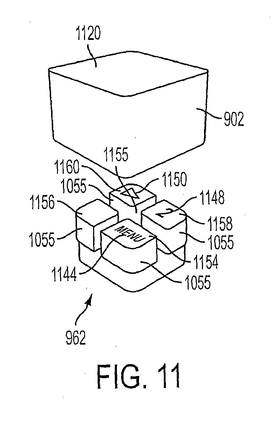

Figure 11 shows a different perspective of piece 962 positioned underneath button cap 902 prior to insertion therein.. In contrast to the button cap shown in Figures 7 and 8, which has openings molded into the surface wall 1120 of the cap, button cap 902 in Figure 11 has no openings or other labeling or marks. Rather, as shown in Figure 11, labels 1144,1148, and 1150 are formed on respective surfaces 1154, 1158, and 1160 of prongs 1055 of piece 962. In one example, respective top surfaces 1154 to 1160 of each prong 1055 are marked with labels 1144 to 1150 using a negative-image technique (e.g., silkscreen), such that the label itself remains translucent and surrounding areas are covered in black.

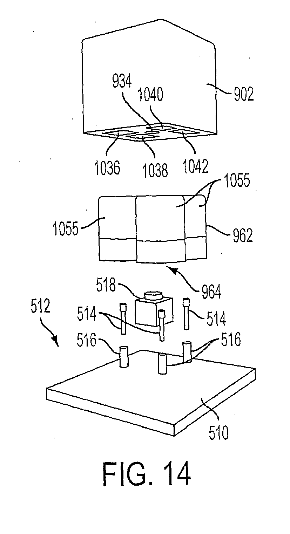

Figure 14 shows an exploded view of a portion of a user controllable interface, according to one embodiment of the present invention. In this example, piece 962 fits over LED-switch assembly 512 on base layer 510, such that each cavity 1066 in each prong 1055 of piece 962 receives a respective light source 514 and spacer 516 pair therein. As a result, each LED 514 is located inside a respective cavity 1066 of a prong 1055 of piece 962. Piece 962 is in turn inserted into hard cap 902, such that each prone 1055 of piece 962 is received into a corresponding cavity 1036 to 1042 of hard cap 902. Accordingly, extension 934 of hard cap 902 passes through an opening 964 in the piece 962 and is aligned with and makes contact with switch 518 on base layer 510. When the button is depressed, extension 934 interacts with switch 518, which has connectivity to a circuitry layer (not shown) below base layer 510.

In one example, labels 1144, 1148, and 1150 are not visible by the user though button cap 902 when the LEDs 514 are not illuminated (see, e.g., Figure 1). However, when one LED 514 is illuminated, the light therefrom travels though a respective one of labels 1144, 1148, and 1150 and through button cap 902 so that the label is revealed to the user (e.g., see Figures 2, 3, and 4). For example, Figure 12 shows prong 1160 of piece 962 with a "play" arrow label 1150, which is illuminated by an underlying light source. The light emitting from illuminated play label 1150 passes through and is visible through button cap 902, which is made from a semi-opaque material, as shown in Figure 13.

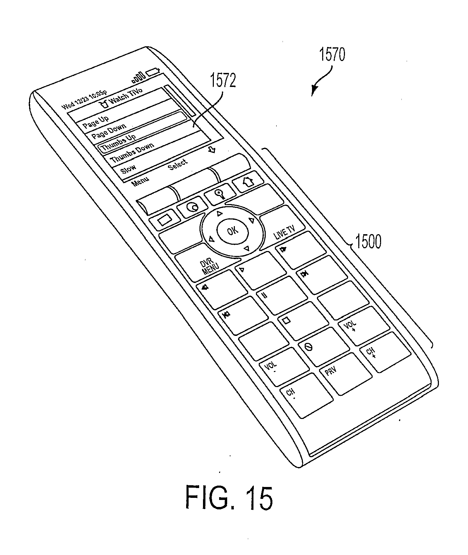

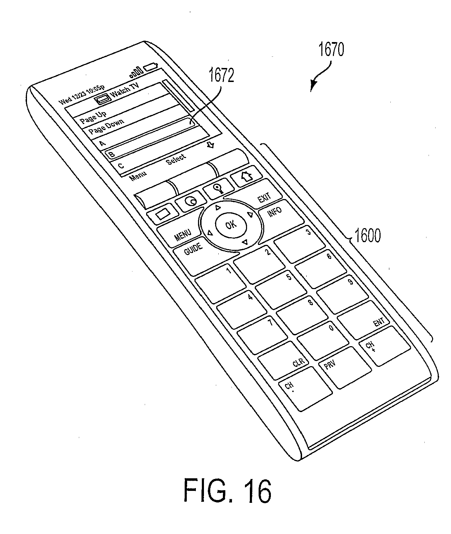

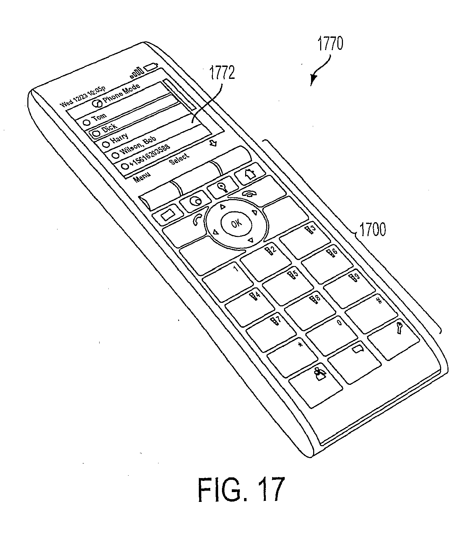

Figures 15, 16, and 17 show a multi-function device 1570 having an interface 1500 and a display 1572, functioning in various modes of operation. The interface 1500 is a keyboard comprising an array of hard buttons in accordance with the present invention. In Figure 15, the interface 1500 of device 1570 is shown illuminated in accordance with a "transport" mode of operation for control of a DVR. In Figure 16, the interface 1600 of device 1670 is shown illuminated in accordance with a "channels" mode of operation for control of a TV. In Figure 17, the interface 1700 of device 1770 is shown illuminated in a "phone" mode of operation for control of a phone.

In addition, display 1572 of device 1570 may display menus and other information relevant to the mode of operation of the device 1570. For example, in the transport mode, display 1572 may display a menu of commands relating to viewer interaction, such as "Thumbs Up" and "Thumbs Down." In the channels mode, display 1672 may display a menu of commands relating to the selection of favorite channels. In the phone mode, display 1772 may display a menu of commands relating to the selection of stored phone numbers.

The device 1570 is an exemplary platform on which the button interface 1500 of the present invention can be utilized. The present invention can be used on any other platform in which control of multi-device functionality is desired. Additionally, the present invention can be used in a computer keyboard to provide keys customizable for use in multiple languages (e.g., Cyrillic, Arabic, or Greek symbols) or for operating special applications or programs (symbols for photo editing or graphics design).

According to one or more examples and/or embodiments of the present invention, a device uses hard, detent, or physical buttons, each of which is configured with different operational labels that are invisible to the user until selectively illuminated by the device according to the device functionality at issue.

In one example, a mode of operation of remote control 1570, 1670, or 1770 (hereinafter, all referred to as 1570) can be controlled using a processor, digital signal processor, microprocessor, or the like (not shown). This can be based on underlying software, firmware, or both. For example, a user inputs information relating to a desired mode of operation via either display 1572, user controller interface 1500, or some other aspect of remote control 1570. Upon receipt of this information, the processor transmits signals to respective control regions 512. The signals are used to control which light source 514 in each respective control region 512 is illuminated for that particular mode of operation.

In another example, underlying functionality of remote control 1570 can be controlled using the processor. With reference, for example, to Figure 14, when a depressible interaction device 902 is depressed, extension 934 contacts switch 518. Switch 518 generates a signal that is transmitted to the processor. The processor initiates an operation through underlying software, firmware, or both, that is associated with the respective switch 518 based on a current mode of operation.

While various embodiments of the present invention have been described above, it should be understood that they have been presented by way of example only, and not limitation. It will be apparent to persons skilled in the relevant art that various changes in form and detail can be made therein without departing from the scope of the invention. Thus, the breadth and scope of the present invention should not be limited by any of the above-described exemplary embodiments, but should be defined only in accordance with the following claims.

It is to be appreciated that the Detailed Description section, and not the Summary and Abstract sections, is intended to be used to interpret the claims. The Summary and Abstract sections can set forth one or more, but not all exemplary embodiments of the present invention as contemplated by the inventor(s), and thus, are not intended to limit the present invention and the appended claims in any way.

## Claims

1. A user control interface (100) for controlling multiple device functionality, comprising:
control regions (512) formed on a support structure (510), each of the control regions (512) comprising respective light emitting areas (514);
a controller coupled to the control regions (512) and configured to control which of the light emitting areas (514) is output from respective depressible interaction devices based on one or more modes of operation of the user control interface;
depressible interaction devices (902) coupled to respective ones of the control regions (512), each of the depressible interaction devices (902) comprising,
a surface wall (1120) including a film layer;
first through fourth side walls perpendicularly coupled to the surface wall (1120),
at least one partition wall perpendicularly coupled to the surface wall and coupled between at least two side walls, and
an extension (934) extending with respect to the at least one partition wall, the extension interacting with the respective ones of the control regions (512), and
**characterised in that** each depressible interaction device further comprises:
an insertable device (962) that is received within the depressible interaction device (902) and aligned with a respective one of the light emitting areas (514), the insertable device (962) comprising a number of insertable portions (1055) corresponding to a number of cavities (1036, 1038, 1040, 1042) formed by coupling the at least one partition wall to the first through fourth walls, the insertable device being positioned underneath the film layer, a top surface of each of the insertable portions (1055) including at least one opening shaped to correspond to the one or more modes of operation of the user control interface.

2. The user control interface of claim 1, wherein the light emitting areas (514) comprise one of light sources, light emitting diodes, or light pipes that are one of mono or multiple coloured.

3. The user control interface of claim 1, wherein the support structure (510) comprises a circuit coupling the controller and the control regions (512).

4. The user control interface of claim 1, wherein the depressible interaction devices (902) are physical buttons.

5. The user control interface of claim 1, wherein the mode of operation comprises at least one of a rest mode, a channels mode, a transport mode, and a phone mode.

6. The user control interface of claim 1, wherein the control regions (512) comprise a switch that is activated when the respective one of the depressible interaction device (902) is depressed, which activation of the switch initiates an operation based on the mode of operation.

7. The user control interface of claim 7, wherein the openings are visible only during a non-rest mode of the one or more modes of operation of the user control interface.

8. The user control interface of claim 1, further comprising: a display device (1572; 1672) that is coupled to the controller, which displays information during each respective one of the one or more modes of operation.

9. The user control interface of claim 1, wherein the depressible interaction devices substantially eliminate lateral output of the light emitting areas (514).

10. The user control interface of claim 1, wherein the depressible interaction devices (902) substantially eliminate output of the light emitting areas (514) when the mode of operation is a rest mode.

## Patentansprüche

1. Benutzersteuerschnittstelle (100) zum Steuern mehrfacher Einrichtungsfunktionalität, umfassend:
Steuerregionen (512), die auf einer Trägerstruktur (510) ausgebildet sind, wobei jede der Steuerregionen (512) jeweilige Licht emittierende Bereiche (514) umfasst;
eine Steuerung, die mit den Steuerregionen (512) gekoppelt ist und dafür eingerichtet ist, zu steuern, welche der Licht emittierenden Bereiche (514) von jeweiligen niederdrückbaren Interaktionseinrichtungen auf Grundlage von einem oder mehreren Betriebsmodi der Benutzersteuerschnittstelle ausgegeben wird;
niederdrückbare Interaktionseinrichtungen (902), die mit jeweiligen der Steuerregionen (512) gekoppelt sind, jede der niederdrückbaren Interaktionseinrichtungen (902) umfassend,
eine Oberflächenwand (1120), die eine Filmschicht enthält;
erste bis vierte Seitenwände, die senkrecht mit der Oberflächenwand (1120) gekoppelt sind,
mindestens eine Trennwand, die senkrecht mit der Oberflächenwand gekoppelt ist und zwischen wenigstens zwei Seitenwänden gekoppelt ist, und
eine Erstreckung (934), die sich in Bezug auf die mindestens eine Trennwand erstreckt, wobei die Erstreckung mit den jeweiligen der Steuerregionen (512) interagiert, und
**dadurch gekennzeichnet, dass** jede niederdrückbare Interaktionseinrichtung ferner umfasst:
eine einführbare Einrichtung (962), die innerhalb der niederdrückbaren Interaktionseinrichtung (902) aufgenommen und mit einem jeweiligen der Licht emittierenden Bereiche (514) ausgerichtet ist, wobei die einführbare Einrichtung (962) eine Anzahl von einführbaren Abschnitten (1055) umfasst, die mit einer Anzahl von Kavitäten (1036, 1038, 1040, 1042) korrespondieren, die durch Koppeln der mindestens einen Trennwand mit den ersten bis vierten Wänden ausgebildet sind, wobei die einführbare Einrichtung unterhalb der Filmschicht angeordnet ist, wobei eine obere Oberfläche jedes der einführbaren Abschnitte (1055) mindestens eine Öffnung enthält, die geformt ist, um mit dem einen oder den mehreren Betriebsmodi der Benutzersteuerschnittstelle zu korrespondieren.

2. Benutzersteuerschnittstelle gemäß Anspruch 1, bei der die Licht emittierenden Bereiche (514) eines umfassen von Lichtquellen, Licht emittierenden Dioden oder Lichtleitern, die eines von einfarbig oder mehrfarbig sind.

3. Benutzersteuerschnittstelle gemäß Anspruch 1, bei der die Trägerstruktur (510) einen Schaltkreis umfasst, der die Steuerung und die Steuerregionen (512) koppelt.

4. Benutzersteuerschnittstelle gemäß Anspruch 1, bei der die niederdrückbaren Interaktionseinrichtungen (902) physische Knöpfe sind.

5. Benutzersteuerschnittstelle gemäß Anspruch 1, bei der Betriebsmodus mindestens einen von einem Ruhemodus, einem Kanälemodus, einem Transportmodus und einem Telefonmodus umfasst.

6. Benutzersteuerschnittstelle gemäß Anspruch 1, bei der die Steuerregionen (512) einen Schalter umfassen, der aktiviert ist, wenn die jeweilige der niederdrückbaren Interaktionseinrichtungen (902) niedergedrückt ist, wobei die Aktivierung des Schalters einen Betrieb auf Grundlage des Betriebsmodus einleitet.

7. Benutzersteuerschnittstelle gemäß Anspruch 7, bei der die Öffnungen nur während eines Nicht-Ruhemodus des einen oder der mehreren Betriebsmodi der Benutzersteuerschnittstelle sichtbar sind.

8. Benutzersteuerschnittstelle gemäß Anspruch 1, ferner umfassend: eine Anzeigeeinrichtung (1572; 1672), die mit der Steuerung gekoppelt ist, welche während jedem jeweiligen des einen oder der mehreren Betriebsmodi Information anzeigt.

9. Benutzersteuerschnittstelle gemäß Anspruch 1, bei der die niederdrückbaren Interaktionseinrichtungen im Wesentlichen eine seitliche Ausgabe der Licht emittierenden Bereiche (514) ausschließen.

10. Benutzersteuerschnittstelle gemäß Anspruch 1, bei der die niederdrückbaren Interaktionseinrichtungen (902) im Wesentlichen eine Ausgabe der Licht emittierenden Bereiche (514) ausschließen, wenn der Betriebsmodus ein Ruhemodus ist.

## Revendications

1. Interface de commande utilisateur (100) pour commander de multiples fonctionnalités de dispositifs, comprenant :
des régions de commande (512) formées sur une structure de support (510), chacune des régions de commande (512) comprenant des zones électroluminescentes respectives (514) ;
un dispositif de commande couplé aux régions de commande (512) et configuré pour commander celle des zones électroluminescentes (514) qui est délivrée par les dispositifs d'interaction enfonçables respectifs sur la base d'un ou plusieurs modes de fonctionnement de l'interface de commande utilisateur ;
des dispositifs d'interaction enfonçables (902) couplés à certaines respectives des régions de commande (512), chacun des dispositifs d'interaction enfonçables (902) comprenant :
une paroi de surface (1120) comprenant une couche de film ;
des première à quatrième parois latérales couplées perpendiculairement à la paroi de surface (1120),
au moins une paroi séparatrice couplée perpendiculairement à la paroi de surface et couplée entre au moins deux parois latérales, et
une extension (934) s'étendant par rapport à la au moins une paroi séparatrice, l'extension interagissant avec celles respectives des régions de commande (512), et
**caractérisée en ce que** chaque dispositif d'interaction enfonçable comprend en outre :
un dispositif insérable (962) qui est reçu dans le dispositif d'interaction enfonçable (902) et aligné avec l'une respective des zones électroluminescentes (514), le dispositif insérable (962) comprenant un certain nombre de portions insérables (1055) correspondant à un certain nombre de cavités (1036, 1038, 1040, 1042) formées par couplage de la au moins une paroi séparatrice aux première à quatrième parois, le dispositif insérable étant positionné en dessous de la couche de film, une surface supérieure de chacune des portions insérables (1055) comprenant au moins une ouverture moulée pour correspondre au(x) un ou plusieurs modes de fonctionnement de l'interface de commande utilisateur.

2. Interface de commande utilisateur selon la revendication 1, dans laquelle les zones électroluminescentes (514) comprennent l'une ou l'autre de sources de lumière, de diodes électroluminescentes ou de guide-lumière qui sont colorés de manière unique ou multiple.

3. Interface de commande utilisateur selon la revendication 1, dans laquelle la structure de support (510) comprend un circuit couplant le dispositif de commande et les régions de commande (512).

4. Interface de commande utilisateur selon la revendication 1, dans laquelle les dispositifs d'interaction enfonçables (902) sont des boutons physiques.

5. Interface de commande utilisateur selon la revendication 1, dans laquelle le mode de fonctionnement comprend au moins l'un ou l'autre entre un mode de repos, un mode de canaux, un mode de transport ou un mode de téléphone.

6. Interface de commande utilisateur selon la revendication 1, dans laquelle les régions de commande (512) comprennent un commutateur qui est activé lorsque celui respectif des dispositifs d'interaction enfonçables (902) est enfoncé, laquelle activation du commutateur amorce une opération basée sur le mode de fonctionnement.

7. Interface de commande utilisateur selon la revendication 7, dans laquelle les ouvertures sont visibles uniquement au cours d'un mode de non repos des un ou plusieurs modes de fonctionnement de l'interface de commande utilisateur.

8. Interface de commande utilisateur selon la revendication 1, comprenant en outre un dispositif d'affichage (1572 ; 1672) qui est couplé au dispositif de commande et qui affiche des informations au cours de chaque mode respectif des un ou plusieurs modes de fonctionnement.

9. Interface de commande utilisateur selon la revendication 1, dans laquelle les dispositifs d'interaction enfonçables éliminent sensiblement la sortie latérale des zones électroluminescentes (514).

10. Interface de commande utilisateur selon la revendication 1, dans laquelle les dispositifs d'interaction enfonçables (902) éliminent sensiblement la sortie des zones électroluminescentes (514) lorsque le mode de fonctionnement est un mode de repos.
